Europäisches Patentamt

European Patent Office

Office européen des brevets

(11) Publication number: **0 592 764 A1**

# EUROPEAN PATENT APPLICATION

(21) Application number: **93107394.4**

(22) Date of filing: **06.05.93**

(51) Int. Cl.⁵: **B64C 11/18**

(30) Priority: **16.10.92 SU 9201062**

(43) Date of publication of application:
**20.04.94 Bulletin 94/16**

(84) Designated Contracting States:
**AT BE CH DE DK ES FR GB GR IT LI LU MC NL PT SE**

(71) Applicant: **AVIATIKA JOINT-STOCK COMPANY**
**33 a, Leningradsky prospect**
**125284 Moskow(RU)**

(72) Inventor: **Grigoryevich, Daniliouk Vladimir**
**15, k.2, flat 91,**
**ulitsa Lesteva**
**117419 Moscow(RU)**
Inventor: **Petrovich, Goriounov Nikolai**
**5/7 Preobrazhenskaya ulitsa**
**107076 Moscow(RU)**

(74) Representative: **Patentanwälte Zellentin & Partner**
**Zweibrückenstrasse 15**
**D-80331 München (DE)**

(54) **The propeller.**

㉗ The invention belongs to aeronautical engineering sphere, and can be used in the microlight and in the light aircrafts as the tractor or the pusher propeller, in the design of their power plants, without regard to the propeller sense of rotation.

The achieved technical results of this invention are the following: the stabilisation of the propeller rate of rotation at takeoff and in the flight; the provision of the propeller range of rotation at 3% ÷ 5% level; and the generation of the maximum power at takeoff regime.

The propeller contains the propeller boss (1) with rigidly - mounted blades (2). The blades (2) have the twist and their configuration is defined by the airfoil-sections (3) at ten of the characteristic sections (4). The airfoil-sections (3) have the setting angles $\phi^0$. The characteristic sections (4) are predetermined with a pitch along the blade radius r = 0,15$R_p$; 0,25$R_p$; 0,35$R_p$; and so forth. Each blade configuration is defined by the width distribution along its span and by the pitch h. From the third characteristic section (4) (r = 0,35$R_p$) to the ninth (r = 0,95$R_p$), the airfoil-sections (3) family is determined by the table, through the ratio of the current thickness along the profile to the maximum thickness.

Fig. 1

View A

The invention belongs to aeronautical engineering sphere, and can be used in the microlight and in the light aircrafts as a tractor or pusher propeller in the design of their power plants, without regard to the propeller sense of rotation.

The propeller of WPS-1 (the wooden propeller series), involving the propeller boss and two rigidly-mounted blades, is known. The relative geometric pitch **h**, as well as the relative pitch **h$_o$**, counted according to $\phi$ ° angles (between the aerodynamic chord and the propeller plane of rotation), are changing along the blade. The blades of all the propellers of this series have the same blade width, the same relative blade width at the same relative radial distance, and the same law of **h$_o$** pitch changes on a radius. The propellers differ only in the **h$_o$** pitch value, and in the same ratio for all the radiuses (see G.I.Kuzmin and D.V.Halezov "The diagrams for the propellers design with the PS-2 (the propeller aerofoil-section series) section 5", The transactions of the CAHI, issue 137, The State Aeronautical and Autotractor Publishing House, Moscow-Leningrad, 1933, page 4-8, page 13-14).

The propeller or WPS-2, the mostly close technical decision to the suggested one, is taken as a prototype. This propeller contains the propeller boss and rigidly-mounted blades, which are fulfilled with the twist along the span, determined by the airfoil - section setting angles of the characteristic blade sections, which are predetermined with a particular pitch (see G.I.Kuzmin "The propeller series-WPS-2", The transactions of the CAHI, issue 177, STTPH (The State Technical-Theoretical Publishing House), Moscow - Leningrad, 1934, page 3-4, page 12, 15-16).

The WPS-2 propellers are designed for very powerful and for the high-speed engines and are considerably more strong in comparison with the WPS-1 propellers, on retention of the same PS-2 section. The WPS-2 propeller blades, compared with WPS-1, have the greater width by 30 percent, and the blade relative width, encreased by 35 percent. Coincidentally with the thickening, the blade section geometric pitch is changed, so that the aerodynamic pitch will be precisely identical to the pitch of the WPS-1 propellers.

Making an estimate of the technique level in existence (more fundamental work on the analogous propellers haven't been carried out since the design of the WPS-1-2 propellers), it is worth noting that neither the first propeller, nor much less the second, which are meant for the powerful and high - speed engines, are unsuitable for the limit and microlight aviation. Besides, it should be pointed out that the propellers in question, were designed as a multi-purpose propellers, that is, they have tolerable characteristics of the static thrust at the rate-of-climb and at cruising regimes. In response to such an approach, the WPS-2 propeller in the prototype has the maximum revolutions in flight, which can exceed over the engine revolutions at takeoff by 30÷40 percent. The power, exerted by the propeller, as the flight speed increases, declines by the factor 1,5 and the engine revolutions increase about 1,25 (1,5) times . This adversely affects the engine itself, which operates in this rating.

The problem, which is solved by this invention-is the creation of the airplane propeller, or more specifically-the creation of a succession, of a family of propellers, which are suited to application in the small-sized aviation, no matter what sense of propeller rotation is chosen in the "tractor" or "pusher" propeller layout.

The achieved technical results of this invention are the following - the stabilisation of the propeller rate of rotation at takeoff and in the flight; this allows to achieve the maximum power at takeoff and to assure the engine revolutions constancy (without increase) in cruising flight, with the provision of the revolutions variation range of 3% ÷ 5%, and with the maximum thrust generation at takeoff rating for the low-power engines.

The problem, mentioned above, is solved, and the technical result is provided by the fact that, in the propeller, containing the propeller boss with rigidly-mounted blades, which are fulfilled with the twist along the span, determined by various airfoil-section setting angles of the blade characteristic sections, which are predetermined with a particular pitch, according to the invention, each blade configuration is defined by ten of characteristic sections, the last-the tenth of which is fulfilled as a blade end section, and the first one is located at a distance 15 percent of the propeller radius from its rotational axis; their pitch, from the second up to the ninth characteristic sections, is fulfilled as 10 percent of the propeller radius; an airfoil-sections, from the third to the ninth characteristic sections, are fulfilled as a family of an airfoil-sections, their maximum thickness varies linearly in the direction of the decrease from the propeller rotational axis to the end section of each blade, with the variation of the airfoil-sections relative thickness from 25 percent, at the third characteristic section, to 12,5 percent, at the ninth characteristic section, in this case the blade airfoil-sections family at the characteristic sections is determined according to the table:

| $\overline{X}$ | 0 | 0,025 | 0,05 | 0,10 | 0,2 | 0,3 |
|---|---|---|---|---|---|---|
| $\overline{Y}_{upper}$ | 0,2992 { | 0,549 | 0,6625 | 0,8055 | 0,957 | 0,995 |
| $\overline{Y}_{lower}$ | | 0,1281 | 0,0811 | 0,0384 | 0,0085 | — |

| $\overline{X}$ | 0,4 | 0,5 | 0,6 | 0,7 | 0,8 | 0,9 | — |
|---|---|---|---|---|---|---|---|
| $\overline{Y}_{upper}$ | 0,983 | 0,928 | 0,829 | 0,6835 | 0,521 | 0,3375 | $R_{tail}=0,0793$ |
| $\overline{Y}_{lower}$ | — | — | — | — | — | — | $R_{nose}=0,128$ |

where

$\overline{X}$      - the airfoil-section chord coordinates;

$\overline{Y}_{upper}, \overline{Y}_{lower}$      - the upper and the lower coordinates of the points, which form the airfoil-section, as the ratio of the airfoil-section current thickness to the maximum thickness;

$\overline{R}_{nose}, \overline{R}_{tail}$      - the radiuses of the airfoil-section nose and tail curvature,

the blade basic dimensions are specified by the table:

| $\bar{r}$ | 0,15 | 0,25 | 0,35 | 0,45 | 0,55 |
|---|---|---|---|---|---|
| $\bar{C} = \dfrac{H}{X}$ | 0,50 | 0,340 | 0,251 | 0,211 | 0,182 |
| $\dfrac{B}{B_{max}}$ | – | – | 0,936 | 0,987 | 1 |
| $\dfrac{h_o}{h_{on}}$ | – | – | 0,843 | 0,942 | 0,981 |

| $\bar{r}$ | 0,65 | 0,75 | 0,85 | 0,95 | 1,0 |
|---|---|---|---|---|---|
| $\bar{C} = \dfrac{H}{X}$ | 0,159 | 0,142 | 0,131 | 0,125 | 0,124 |
| $\dfrac{B}{B_{max}}$ | 0,972 | 0,90 | 0,773 | 0,599 | 0,497 |
| $\dfrac{h_o}{h_{on}}$ | 0,993 | 1 | 0,998 | 0,995 | 0,994 |

where

$$\bar{C} = \frac{H}{X}$$

-the airfoil-section relative thickness, as the ratio of the airfoil-section maximum thickness (**H**), at the characteristic section, to the chord (**H**);

$$\frac{B}{B_{max}}$$

-the ratio of the blade width at the characteristic section to the blade maximum width;

$$\frac{h_o}{h_{on}}$$

-the ratio of the pitch $h_o$ at any radius $\bar{r}$ to the conventional pitch $h_{on}$ at radius $\bar{r}$ = 0,75 ($h = \bar{n}\,\bar{r}\,tg\phi°$), where $\phi°$ - is the airfoil - section setting angle of the characteristic section, with the blade maximum width value $B_{max}$, which lies in the range from 5 percent to 15 percent of the propeller diameter, and the blade width and the blade thickness deviations lie within the range of ± 2,5%.

Besides, the airfoil - section setting angles are fulfilled decreasing along the blade radius, at all the characteristic sections, and are determined by the table:

| $\bar{r}$ | 0,15 | 0,25 | 0,35 | 0,45 | 0,55 |
|---|---|---|---|---|---|
| $\varphi°$ | $22°18'$ | $22°03'$ | $21°00'$ | $18°27'$ | $15°52'$ |

| $\bar{r}$ | 0,65 | 0,75 | 0,85 | 0,95 | 1 |
|---|---|---|---|---|---|
| $\varphi°$ | $13°41'$ | $12°00'$ | $10°36'$ | $9°28'$ | $9°00'$ |

where

$\bar{r}$ - the blade relative span;

$\phi°$ - the setting angle of the characteristic section profile.

The invention is explained by the following drawings:

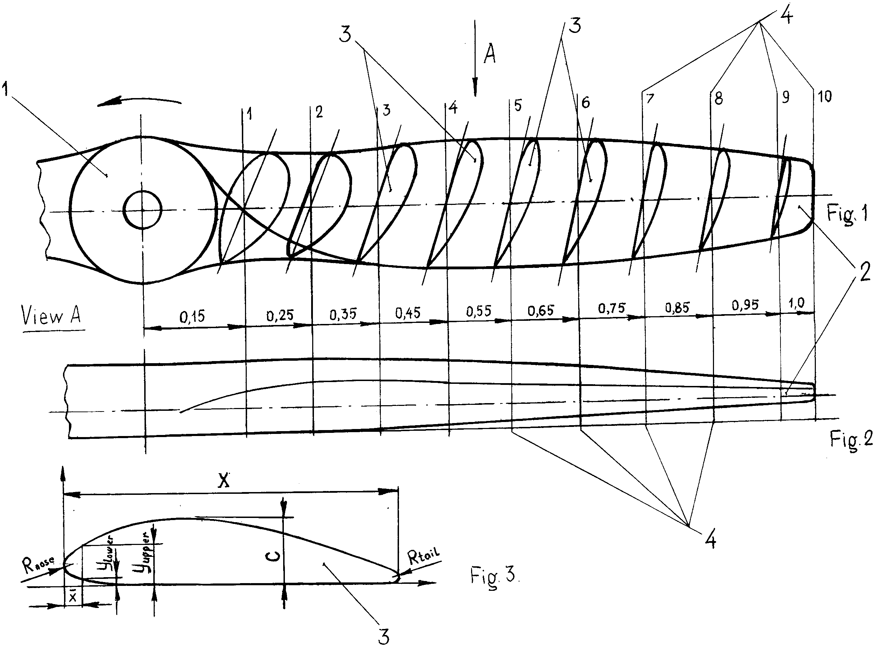

fig.1 - the propeller with the characteristic sections profiles along the blade radius is shown;

fig.2 - the view A fig.1;

fig.3 - the characteristic section profile.

The propeller contains the propeller boss 1 with rigidly-mounted blades 2. The blades 2 are fulfilled with the twist along the radius, determined by various airfoil-sections 3 setting angles $\phi°$ of the blade characteristic sections 4, which are predetermined with a particular pitch. Each blade 2 configuration is defined by ten of characteristic sections 4. The first one 4 is located at a distance 15 percent of the propeller radius, and the last section represents the blade 2 end radius. From the second characteristic section 4 up to the ninth, the section pitch is chosen as 10 percent of the propeller radius. From the third (35% $R_p$- where $R_p$- the propeller radius) to the ninth (95% $R_p$) characteristic sections 4, the airfoil-sections 3 are fulfilled as a airfoil - sections 3 family, determined according to the table. The maximum airfoil - sections 3 thickness (in absolute units) varies linearly in the direction of the decrease from the propeller rotational axis to the end section of each blade 2. The relative thickness $\bar{C}$

$$(\bar{C} = \frac{H}{X},$$

where H - the maximum airfoil section 3 thickness of the characteristic section 4, and X - this airfoil-section 3 chord) varies from 25 percent at the third characteristic section 4 (35% $R_p$) to 12,5 percent at the ninth characteristic section 4 (95% $R_p$). All the propeller blade characteristics are given in the table, where variation of the blade 2 airfoil - sections 3 relative thickness $\bar{C}$ along it's radius $R_p$ is shown, as well as, the variation of the blade 2 width along the radius $R_p$, as the ratio of the blade 2 width, at the characteristic section 4, to the blade 2 maximum width (55% $R_p$). The blade 2 pitch variation (with a given twist) is also shown, as the ratio of the pitch $\mathbf{h_o}$ at any relative radius $\bar{\mathbf{r}}$ to the conventional pitch $\mathbf{h}_{on}$ at $\bar{\mathbf{r}}$ = 0,75 (75% $\mathbf{R_p}$). The value of the blade 2 maximum width is given in the range from 5 percent to 15 percent of the propeller diameter (2$\mathbf{R}$).

The propeller is functioning in the following way.

The turning propeller (the direction of rotation is not shown), which has the specific blades 2 twist with the airfoil-section 3 setting angles $\phi°$ of the characteristic sections, generates the thrust force, which is transfered to the airplane by the engine (not shown). By this means, the propeller performs it's function. The special feature of this propeller is that the airfoil-sections 3 at characteristic sections 4 are too "thick" for the propellers. At the blade end (95% $\mathbf{R_p}$) we have the airfoil-section 12,5% thick, what is in two times over the airfoil-section relative thickness of the most-used propellers, and the same is true for the whole span of the blade. Yet, precisely these blades, chosen with such a twist and airfoil-sections combination at the propeller, allow to avoid the revolution overshoot on the engine by 30% ÷ 40% percent in the cruising flight, as it takes place in the prototype, and to achieve the maximum thrust force at takeoff rating. The takeoff rating is chosen as a determining regime in the small-sized aviation. With the suggested propeller, the range of the revolution overshoot on the engine will comprise 3% ÷ 5%. That is the most important criteria of the serviceability and operating longevity for the light-duty engines. Otherwise, this will cause the break-down of the light-duty engines.

## Claims

**1.** The propeller, containing the propeller boss 1 with rigidly-mounted blades 2, which are fulfilled with the twist along the radius, determined by various airfoil-sections 3 setting angles $\phi°$ of the blade characteristic sections 4, which are predetermined with a particular pitch, differs in that, each blade 2 configuration is defined by ten of characteristic sections 4, the last the tenth of which is fulfilled as the blade 2 end section and the first one 4 is located at a distance 15 percent of the propeller radius from its rotational axis, from the second characteristic section 4 up to the ninth, the section pitch is chosen as 10 percent of the propeller radius, from the third to the ninth characteristic sections 4, the airfoil-sections 3 are fulfilled as a airfoil-sections 3 family, their maximum thickness varies linearly in the direction of the decrease from the propeller rotational axis to the end section of each blade 2, with variation of airfoil-sections 3 relative thickness from 25 percent at the third characteristic section 4 to 12,5 percent at the ninth characteristic section 4, as this takes place the blade 2 airfoil-sections 3 family at the characteristic sections 4 are determined according to the table:

| $\overline{X}$ | 0 | 0,025 | 0,05 | 0,10 | 0,2 | 0,3 |
|---|---|---|---|---|---|---|
| $\overline{Y}_{upper}$ | 0,2992 | 0,549 | 0,6625 | 0,8055 | 0,957 | 0,995 |
| $\overline{Y}_{lower}$ | | 0,1281 | 0,0811 | 0,0384 | 0,0085 | – |

| $\overline{X}$ | 0,4 | 0,5 | 0,6 | 0,7 | 0,8 | 0,9 | – |
|---|---|---|---|---|---|---|---|
| $\overline{Y}_{upper}$ | 0,983 | 0,928 | 0,829 | 0,6835 | 0,521 | 0,3375 | $R_{tail}=0,0793$ |
| $\overline{Y}_{lower}$ | – | – | – | – | – | – | $R_{nose}=0,128$ |

where
$\overline{X}$     - the airfoil-section 3 chord coordinates;
$\overline{Y}_{upper}, \overline{Y}_{lower}$     - the upper and the lower coordinates of the points, which form the airfoil-section 3, as the ratio of the airfoil-section 3 current thickness to the maximum thickness
$\overline{R}_{nose}, \overline{R}_{tail}$     - the radiuses of the airfoil-section 3 nose and tail curvature,
the blade basic dimensions are specified by the table:

| $\bar{r}$ | 0,15 | 0,25 | 0,35 | 0,45 | 0,55 |
|---|---|---|---|---|---|
| $\bar{C} = \dfrac{H}{X}$ | 0,50 | 0,340 | 0,251 | 0,211 | 0,182 |
| $\dfrac{B}{B_{max}}$ | – | – | 0,936 | 0,987 | 1 |
| $\dfrac{h_o}{h_{on}}$ | – | – | 0,843 | 0,942 | 0,981 |

| $\bar{r}$ | 0,65 | 0,75 | 0,85 | 0,95 | 1,0 |
|---|---|---|---|---|---|
| $\bar{C} = \dfrac{H}{X}$ | 0,159 | 0,142 | 0,131 | 0,125 | 0,124 |
| $\dfrac{B}{B_{max}}$ | 0,972 | 0,90 | 0,773 | 0,599 | 0,497 |
| $\dfrac{h_o}{h_{on}}$ | 0,993 | 1 | 0,998 | 0,995 | 0,994 |

where

$$\bar{C} = \frac{H}{X}$$

-the airfoil-section relative 3 thickness, as the ratio of the airfoil-section 3 maximum thickness (**H**), at the characteristic section, to the chord (**H**);

$$\frac{B}{B_{max}}$$

-the ratio of the blade 2 width at the characteristic section 4 to the blade 2 maximum width;

8

$$\frac{h_o}{h_{on}}$$

-the ratio of the pitch $h_o$ at any radius $\bar{r}$ to the conventional pitch $h_{on}$ at radius $\bar{r}$ = 0,75 ($h$ = $\bar{n}\,\bar{r}$ $tg\phi°$), where $\phi°$ - is the airfoil - section 3 setting angle of the characteristic section,
with the blade 2 maximum width value $B_{max}$, which lies in the range from 5 percent to 15 percent of the propeller diameter, and the blade 2 width and the blade 2 thickness deviations lie within the range of ± 2,5%.

2. The propeller according to the 1st point differs in that, the airfoil-section 3 setting angles are fulfilled decreasing along the blade 2 radius, at all the characteristic sections 4, and are determined by the table:

| $\bar{r}$ | 0,15 | 0,25 | 0,35 | 0,45 | 0,55 |
|---|---|---|---|---|---|
| $\phi°$ | 22°18′ | 22°03′ | 21°00′ | 18°27′ | 15°52′ |

| $\bar{r}$ | 0,65 | 0,75 | 0,85 | 0,95 | 1 |
|---|---|---|---|---|---|
| $\phi°$ | 13°41′ | 12°00′ | 10°36′ | 9°28′ | 9°00′ |

where
$\bar{r}$    - the blade relative span;
$\phi°$    - the setting angle of the characteristic section profile,
with ± 15′ of an unidirectional variation range of all the characteristic sections 4 setting angles.

9

View A

0,15  0,25  0,35  0,45  0,55  0,65  0,75  0,85  0,95  1,0

Fig. 1

Fig. 2

Fig. 3

$R_{nose}$  $\bar{x}$  $y_{lower}$  $y_{upper}$  C  $R_{tail}$  X

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | EP-A-0 169 964 (SCHMITT D.)<br>* page 4, line 21 - page 5, line 22 *<br>* page 10, line 12 - line 27; figures 1-3 * | 1,2 | B64C11/18 |
| A | US-A-1 871 203 (SMITH M. A.)<br>* the whole document * | 1,2 | |

TECHNICAL FIELDS
SEARCHED      (Int.Cl.5)

B64C

The present search report has been drawn up for all claims

| Place of search | Date of completion of the search | Examiner |
|---|---|---|
| THE HAGUE | 25 January 1994 | Zeri, A |

EPO FORM 1503 03.82 (P04C01)